# EUROPÄISCHE PATENTANMELDUNG

(11) **EP 4 700 172 A1**
(43) Veröffentlichungstag der Anmeldung: **25.02.2026**
(21) Anmeldenummer: 25195869.0
(22) Anmeldetag: 14.08.2025
(51) Int. Cl.: D06F 58/04

(54) **WÄSCHETROCKNER MIT TROMMELDICHTUNGEN**

(30) Priorität: 19.08.2024 CH 8692024
(71) Anmelder: V-Zug AG, 6300 Zug (CH)
(72) Erfinder: Cifyildiz, Serdar, 8400 Winterthur (CH)
(74) Vertreter: E. Blum & Co. AG

(57) **Zusammenfassung**

Die Erfindung betrifft einen Trockner 10, insbesondere einen Haushaltswäschetrockner. Dieser umfasst ein Gehäuse 1, eine drehbare Trommel 2 zur Aufnahme von Textilien sowie Trommeldichtungen 3, 4, welche zwischen Trommel und Gehäuse angeordnet sind. Die Trommeldichtungen weisen einen elastischen Grundkörper und einen darauf befestigten Filz auf, dessen Fasern entweder aus Polyethylen bestehen oder mit Polyethylen beschichtet sind.

## Beschreibung

### Gebiet der Erfindung

Die Erfindung betrifft einen Trockner, insbesondere einen Haushaltswäschetrockner. Dieser umfasst ein Gehäuse, eine drehbare Trommel zur Aufnahme von Textilien sowie Trommeldichtungen, welche zwischen Trommel und Gehäuse angeordnet sind.

### Hintergrund

Bei Benutzung des Trockners zirkuliert Luft durch die Trommel, wobei den in der Trommel befindlichen Textilien Feuchtigkeit entzogen und die Luft mit Feuchtigkeit angereicht wird. Es ist wünschenswert, und Stand der Technik, die Trommel abzudichten um ein sicheres und energiesparendes Funktionieren des Trockners zu ermöglichen.

Die im Stand der Technik bekannten Trockner umfassen eine rotierende Trommel welche typischerweise in alternierende Richtung dreht um so die darin befindliche Textilien einem trocknenden Luftstrom auszusetzen. Die Trommel umfasst typischerweise einen zentralen zylindrischen Körper, eine Vorderseite und eine Rückseite. Die Vorderseite schliesst an ein vorderes Abschlusselement des Gehäuses an, die Rückseite an ein hinteres Abschlusselement des Gehäuses. In Benutzung dreht sich der Trommelkörper, während die genannten Abschlusselemente ruhen. Die Vorderseite der Trommel enthält typischerweise eine mit einer Tür verschliessbare Öffnung zum Befüllen und Entnehmen von Textilien.

Gemäss Stand der Technik wird die Trommel an Ihrer Vorderseite und an Ihrer Rückseite mittels Trommeldichtungen gegen das Gehäuse, insbesondere das vordere und hintere Abschlusselement abgedichtet.

EP4288265 beschreibt eine nahtfreie Trommeldichtung mit Filzschicht. Gegenstand des in diesem Dokument beschriebenen Dichtringes ist es, vernähte Schnittstellen zu vermeiden um dadurch die Betriebssicherheit zu verbessern.

EP3653781 beschriebt ebenfalls eine nahtfreie Trommeldichtung. Gemäss diesem Dokument wird die Trommeldichtung bevorzugt extrudiert und enthält bevorzugt einen elastischen Körper ("stretch"). Dieser "stretch" enthält eine vielzahlt orientierter Fasern und wird als vorteilhaft gegenüber einem Filz dargestellt.

CA905448 beschreibt eine Trommeldichtung für Trockner umfassend eine Filzschicht und einen elastomeren Träger. Die im Dokument beschriebene Trommeldichtung wird gefaltet und zusammengenäht, so dass der Träger innenliegend ist und die Filzschicht alle Aussenseiten dieser Trommeldichtung bildet; im Dokument als "Tränenförmiger Querschnitt" bezeichnet.

US2013/0266787 beschreibt eine Trommeldichtung für Trockner umfassend eine Filzschicht mit flammhemmenden Fasern und Bindermaterial. Die Materialien sind so gewählt, dass sie bei ca. 538°C (1000°F) auf das doppelte Volumen expandieren.

Die bekannten Trommeldichtungen arbeiten nicht perfekt. Entweder ist die Lebensdauer des Trommeldichtung nicht ausreichend und / oder die Dichtwirkung ist ungenügend und / oder der Energieverbrauch bei Benutzung des Trockners ist hoch. Ferner enthalten die bekannten Trommeldichtungen oftmals Materialien die als gesundheitlich bedenklich und / oder umweltschädigend eingestuft werden.

### Darstellung der Erfindung

Es stellt sich die Aufgabe, einen Trockner bereitzustellen, dessen Trommeldichtungen einen oder mehrere der genannten Nachteile überwinden.

Diese Aufgabe wird durch den Gegenstand der unabhängigen Ansprüche 1 und 9 gelöst. Demgemäss umfasst der Trockner, insbesondere der Haushaltswäschetrockner, die hier beschriebenen Trommeldichtungen. Weitere Ausgestaltungen, Vorteile und Anwendungen der Erfindung ergeben sich aus den abhängigen Ansprüchen und aus der nun folgenden Beschreibung anhand der Figuren.

### Kurze Beschreibung der Zeichnungen

Die Darstellungen zeigen in Fig. 1 einen Haushaltswäschetrockner in schematischer Darstellung; in Fig. 2 einen Haushaltswäschetrockner im Querschnitt; in Fig. 3 eine Trommeldichtung in der Gesamtansicht und in Fig. 4 in einem Querschnitt; und in Fig. 5 die Montageposition der Trommeldichtung im Hausaltwäschetrockner.

### Weg zur Ausführung der Erfindung

Definitionen:
Der Begriff "Filz" ist allgemein bekannt und bezeichnet ein nicht-gewebtes textiles Flächengebinde aus zufällig orientierten Fasern. Die Fasern können natürliche Fasern sein, wie bspw. Wolle, oder synthetische Fasern, wie bspw. erdöl-basierte Fasern, sowie Gemische verschiedener Fasern.

Der Begriff "Polyethylen" bzw. "PE" ist allgemein bekannt und bezeichnet den durch Kettenpolymerisation von Ethen hergestellten thermoplastischen Kunststoff. Polyethylen liegt in verschiedenen Graden bzw. Typen vor, diese werden aufgrund Ihrer Dichte als PE-HD, PE-MD, PE-LD und PE-LLD bezeichnet. Die Dichteunterschied resultieren aus den unterschiedlichen Verzweigungsgraden der Polymerketten, wobei PE-HD ("high density",) die höchste Dichte und den niedrigsten Verzweigungsgrad aufweist. Ferner werden die Typen PE-HMW ("high molecular weight",) und PE-UHMW ("ultra high molecular weight",) im Handel separat aufgeführt. Diese weisen ebenfalls eine hohe Dichte auf und sind ebenfalls gering verzweigt. Im Rahmen der vorliegenden Erfindung haben sich gering verzweigte Polyethylene als besonders vorteilhaft erwiesen, also Polyethylene der Gruppe PE-HD mit Mw 250 bis ≤ 400 kg/mol, PE-HMW mit Mw 400 - 1000 kg/mol, und PE-UHMW mit Mw ≥ 1000 kg/mol. Wobei der Wert Mw die mittlere Molmasse angibt.

Der Begriff "Trommeldichtung" ist allgemein bekannt und bezeichnet, insbesondere im Kontext von Trocknern, einen ringförmigen Körper mit Innendurchmesser d und einem Querschnitt der eine Breite b und eine Höhe h aufweist. Als "Stirnflächen" werden die Seiten des Ringes bezeichnet, welche durch die Breite b charakterisiert sind. Die Trommeldichtung ist geeignet, die Trommel eines Trockners an Ihrer Vorderseite und an Ihrer Rückseite gegen das Gehäuse, insbesondere das vordere und hintere Abschlusselement, abzudichten. Vom Begriff der Trommeldichtung abzugrenzen ist der Begriff des "Dichtungsringes". Als Dichtungsring wird ein Element bezeichnet, an welches die Trommeldichtung befestigt wird, typischerweise ist dies ein Kunststoff-Ring mit C-förmigem Querschnitt. Somit kann ein "Dichtungsring" genauer als "Trommeldichtung-Befestigungsring" bezeichnet werden.

Trockner:
In einem ersten Aspekt betrifft die Erfindung einen Trockner, insbesondere ein Haushaltswäschetrockner 10, umfassend ein Gehäuse 1, eine Trommel 2, eine vordere Trommeldichtung 3 und eine hintere Trommeldichtung 4, wobei die Trommel 2 drehbar im Gehäuse 1 gelagert ist, zur Aufnahme von Textilien geeignet ist, das Durchströmen mit Luft 11 zur Trocknung der Textilien erlaubt; und wobei die vordere und hintere Trommeldichtung 3, 4 das Abdichten der die Trommel 2 durchströmenden Luft 11 gegenüber dem Gehäuse 1 bewirkt, jeweils einen elastischen Grundkörper 5 und einen darauf befestigten Filz 6 enthalten, der Grundkörper 5 in Richtung des Gehäuses 1 ausgerichtet ist, und der Filz 6 in Richtung Trommel 2 ausgerichtet ist, dadurch gekennzeichnet, dass der Filz 6 aus Polyethylen hoher Dichte (PE-HD), hochmolekularem Polyethylen (PE-HMW) oder ultrahochmolekularem Polyethylen (PE-UHMW) besteht oder dieses enthält. Erfindungsgemäss ist die Trommeldichtung 3 ringförmig.

Es zeigt sich, dass derartige Trommeldichtungen eine lange Lebensdauer aufweisen, eine über diese Lebensdauer gute Dichtwirkung zeigen und den Energieverbrauch bei Benutzung des Trockners positiv beeinflussen. Ohne sich an eine Theorie gebunden zu fühlen wird davon ausgegangen, dass die Wahl des Filzes 6 massgeblich das Erreichen dieser sich wiederstrebenden Ziele ermöglicht.

Dieser Aspekt der Erfindung, einschliesslich vorteilhafter Ausgestaltungen soll nachfolgend näher erläutert werden.

In einer ersten Ausgestaltung bestehen die Fasern des Filzes 6 zu mehr als 50 wt%, bevorzugt mehr als 90 wt%, besonders bevorzugt zu 100 wt%, aus PE-HD, PE-HMW, oder PE-UHMW. Der erfindungsgemässe Filz kann aus einem Fasertyp oder aus einer Mischung von Fasern bestehen. Es zeigt sich, dass bereits bei einem Gewichtsanteil von 50 wt% PE-Fasern eine gute Dichtwirkung bei langer Haltbarkeit ermöglicht werden und der Energieverbrauch positiv beeinflusst wird. In dieser Ausgestaltung der Erfindung ist keine weitere Beschichtung der Filzfasern nötig.

In einer Ausführungsform sind die Filzfasern frei von teilweise oder vollständig halogenierten Fasern. In einer Ausführungsform enthalten die Filzfasern nur die Elemente Kohlenstoff und Wasserstoff, sowie ggf. Stickstoff und / oder Sauerstoff.

In einer Ausführungsform besteht der Filz aus PE-HD Fasern. In einer weiteren Ausführungsform besteht der Filz aus PE-HMW Fasern. In einer weiteren Ausführungsform besteht der Filz aus PE-UHMW Fasern.

In einer zweiten Ausgestaltung bestehen die Fasern des Filzes 6 aus einem Polymer oder Polymergemisch, welche beschichtet sind. Vorteilhaft sind die Fasern des Filzes ausgewählt aus der Gruppe umfassend Polypropylen, Polyester, Polyamide, Polyurethane, Polyacrylate und Polyacrlylnitrile. In dieser Ausgestaltung sind die Fasern des Filzes 6 mit mindesten 1 wt%, bevorzugt 2 wt%, besonders bevorzugt 5 wt% PE-HD, PE-HMW, oder PE-UHMW beschichtet. Die genannte Beschichtung kann entweder als kontinuierliche Beschichtung der Faser vorliegen oder in Form einer Vielzahl von Mikropartikeln, bspw. mit einer Partikelgrösse von 10 - 50 Mikrometern, insbesondere 20 Mikrometern (gemessen mittels Lightscattering).

In einer Ausführungsform sind die Filzfasern frei von teilweise oder vollständig halogenierten Fasern. In einer Ausführungsform enthalten die Filzfasern nur die Elemente Kohlenstoff, Wasserstoff, ggf. Stickstoff und / oder Sauerstoff. Erfindungsgemäss ist die Beschichtung frei von teilweise oder vollständig halogenierten Komponenten. In einer Ausführungsform enthält die Beschichtung nur die Elemente Kohlenstoff und Wasserstoff.

Diese Ausgestaltung der Erfindung ermöglicht es, eine Vielzahl von kommerziell erhältlichen Filzen als Ausgangsmaterial zu verwenden.

In einer weiteren Ausgestaltung besteht der Grundkörper 5 aus einem offenzelligen Polymerschaum. Solche Polymerschäume sind kommerziell erhältlich und verbinden eine gewünschte Flexibilität mit einer gewissen Luftdurchlässigkeit. So wird eine vollständig hermetische Abdichtung vermieden und ein sicherer Betrieb des Trockners ermöglicht. Als besonders geeignet haben sich offenzellige Polyurethanschäume erwiesen. Geeignete Schäume haben vorzugsweise eine Dichte von 30 - 60 kg/m³, insbesondere 40 - 50 kg/m³.

In einer alternativen Ausgestaltung besteht der Grundkörper 5 aus einem nicht-geschäumten Elastomer, welcher entlang des Umfangs ein Hohlprofil aufweist, bevorzugt ein O-Ring 5'. Anstelle eines offenzelligen Polymerschaums wird also ein flexibles, luftundurchlässiges polymeres Material vorgesehen, das durch seine räumliche Gestaltung, bspw. ein Querschnitt in Form eines O-Profils, die gewünschte Flexibilität aufweist. In dieser Ausgestaltung wird ein nahezu luftdichter Abschluss ermöglicht. Geeignete polymere Materialien sind bspw. bekannte Dichtungsprofile aus Silikon oder synthetischem Kautschuk.

Die beiden Elemente der Trommeldichtung, Filz 6 und Grundkörper 5, können auf an sich bekannte Art miteinander verbunden werden. Eine geeignete Auswahl kann der Fachmann aufgrund der verwendeten Materialkombination treffen. Typischerweise werden die beiden Elemente unlösbar und über die gesamte Kontaktfläche miteinander verbunden. In einer Ausgestaltung werden Filz 6 und Grundkörper 5 durch Verkleben, insbesondere mittels Übertragungskleber, verbunden. In einer Ausgestaltung werden Filz 6 und Grundkörper 5 durch Aufkaschieren, insbesondere Flammkaschieren, verbunden.

In einer weiteren Ausgestaltung weist der Grundkörper 5 auf der dem Filz 6 gegenüberliegenden Seite eine Klebschicht 7 auf. Diese ermöglicht eine einfache und sichere Montage der Trommeldichtung am Gehäuse 1, insbesondere eines am Gehäuse 1 vorgesehenen Dichtungsringes, des Trockners 10. Geeignete Klebstoffe sind dem Fachmann bekannt, bspw. auf Basis von Acrylsäuren.

In einer Ausgestaltung sind vordere und hintere Trommeldichtung in Bezug auf Materialien und Geometrie identisch. In einer alternativen Ausgestaltung sind vordere und hintere Trommeldichtung aus identischen Materialien aber mit verschiedener Geometrie.

In einer Ausgestaltung sind alle Materialien der Trommeldichtung, also Grundkörper und Filz (Fasern und ggf. vorhandene Beschichtung) sowie ggf. Klebeschicht frei von halogenhaltigen Verbindungen.

Trommeldichtung:
In einem zweiten Aspekt betrifft die Erfindung einen Trommeldichtung. Ein Trommeldichtung gemäss diesem Aspekt der Erfindung umfasst einen elastischen, ringförmigen Grundkörper 5, einen auf dessen einer Stirnseite befestigten Filz 6, eine auf dessen anderer Stirnseite angebrachte Klebschicht 7, wobei die Fasern des Filzes 6 zu mindestens 50 wt% aus Polyethylen bestehen oder mit mindesten 1 wt% Polyethylen beschichtet sind, und der Filz 6 auf den Grundkörper 5 aufkaschiert oder mit diesem verklebt ist.

Derartige Trommeldichtungen sind zur Verwendung in einem Wäschebehandlungsgerät, insbesondere in einem Trockner, bspw. einem Haushaltswäschetrockner 10, geeignet. Dieser Aspekt der Erfindung soll nachfolgend näher erläutert werden. Entsprechend betrifft die Erfindung auch die Verwendung einer Trommeldichtung wie hier beschrieben in einem Trockner, insbesondere die Verwendung zweier Trommeldichtungen wie hier beschrieben in einem Trockner zum Abdichten der im Kreislauf durch die Trommel geführten Luft gegenüber den im Gehäuse befindlichen elektrischen und mechanischen Einrichtungen.

Geeignete Materialien für Grundkörper 5, Filz 6 und Klebeschicht 7 sind im ersten Aspekt der Erfindung bereits erläutert und treffen hier gleichermassen zu. Vorteilhaft sind alle Materialien der Trommeldichtung, also Grundkörper und Filz (Fasern und ggf. vorhandene Beschichtung) frei von halogenhaltigen Verbindungen.

Die Geometrie der Trommeldichtung kann in weiten Bereichen variieren und hängt von der Konstruktion des Trockners ab. Wie eingangs erwähnt weist eine Trommeldichtung eine ringförmige Gestalt auf. Geeignete Trommeldichtungen weisen bspw. einen Innendurchmesser d von 400-600 mm, bevorzugt 450-500 mm auf. Geeignete Trommeldichtungen weisen bspw. eine Breite b von 5-20 mm, bevorzugt 8-15 mm auf. Geeignete Trommeldichtungen weisen bspw. eine Höhe h von 5-25 mm, bevorzugt 10-20 mm auf.

Das Verhältnis Höhe Filz h_{F} : Höhe Grundkörper h_{G} liegt bei erfindungsgemässen Trommeldichtungen typischerweise im Bereich von 0.1:1 bis 0.5:1. Das Verhältnis Höhe h zu Breite b liegt bei erfindungsgemässen Trommeldichtungen im Verhältnis 0.5 : 1 bis 2 : 1.

Der Querschnitt der Trommeldichtung wird an die konstruktiven Erfordernisse des jeweiligen Trockners angepasst. Als geeignet erweist sich oftmals ein rechteckiger Querschnitt. Ein solcher rechteckiger Querschnitt ist leicht herstellbar, insbesondere wenn der Grundkörper ein offenzelliger Polymerschaum ist.

Vordere und hintere Trommeldichtung 3, 4 können die gleiche Dimension (d, h, b, Querschnitt) aufweisen oder voneinander verschieden sein.

Die Herstellung einer erfindungsgemässen Trommeldichtung erfolgt auf an sich bekannte weise, unter Verwendung der hier beschriebenen Materialien. Im Falle von offenkettigen Polymerschäumen als Grundkörper umfasst die Herstellung bspw. folgende Schritte: (a) Bereitstellen einer Matte aus offenzelligem Polymerschaum und einer PE-beschichteten Filzmatte, (b) Verbinden dieser beiden Matten mittels kaschieren oder flächenbündigem Verkleben, (c) Aufbringen einer Klebeschicht auf der anderen Seite der Polymerschaummatte sowie einer Schutzfolie auf dieser Klebschicht, (d) Zuschneiden der Matte in Streifen der gewünschten Breite und (e) Vernähen der Stossflächen dieser Streifen zur Bildung eines Ringes, wobei die besagte Schutzfolie die eine Stirnfläche und der besagte Filz die andere Stirnfläche der Trommeldichtung bilden. Die im Schritt (a) bereitgestellte Filzmatte wird vorgängig mit einem Polyethylen wie hier beschrieben beschichtet. Dies kann bspw. durch Aufsprühen oder Aufstreichen einer PEhaltigen Emulsion mit anschliessendem Trockenschritt erfolgen.

Figuren:
In den Figuren werden folgende Referenzzeichen verwendet

| | | | |
|---|---|---|---|
| 10 | Trockner | 3 | vordere Trommeldichtung |
| 1 | Gehäuse | 4 | hintere Trommeldichtung |
| 2 | Trommel | 5 | Grundkörper |
| 11 | durchströmende Luft | 6 | Filz |
| | | 7 | Klebeschicht |

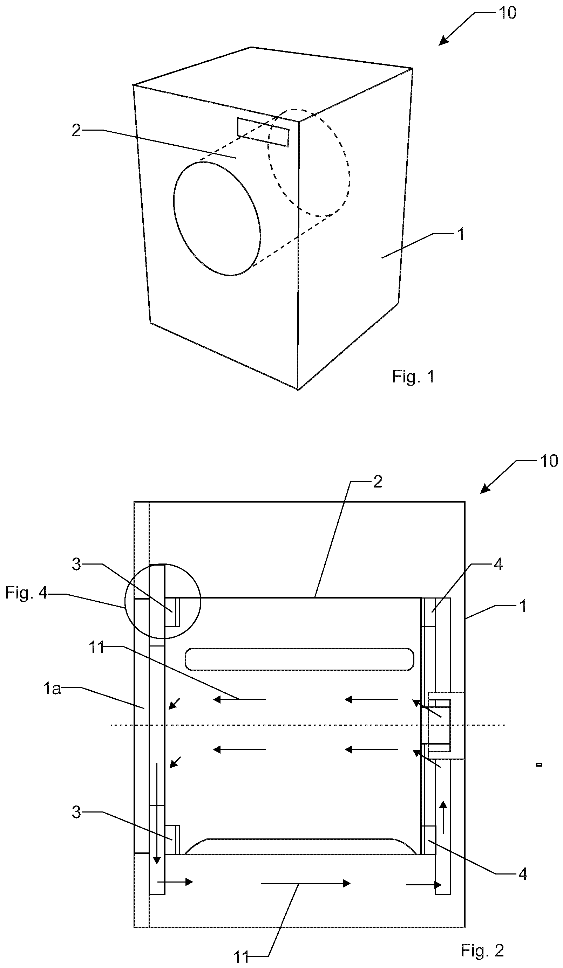

Fig. 1 zeigt einen schematisch dargestellten Haushaltswäschetrockner. Dieser umfasst ein Gehäuse 1 mit einer Türe 1a, eine Trommel 2 (gestrichelt eingezeichnet) mit einer Rotationsachse. Der Benutzer füllt in die Trommel 2 feuchte Textilien zum Trocknen ein. Während des Trocknens strömt Luft durch die Trommel 2 und entzieht den Textilien Feuchtigkeit. Die feuchte Luft durchströmt einen Verdampfer und wird dabei abgekühlt so dass der Taupunkt unterschritten wird und mitgeführtes Wasser kondensiert. Das Kondenswasser wird abgeführt, die getrocknete Luft erwärmt und wieder in die Trommel 2 geführt.
Fig. 2 zeigt die Position der vorderen Trommeldichtung 3 (der Tür zugewandten Seite) und der hinteren Trommeldichtung 4 (der Tür abgewandten Seite). Die beiden Trommeldichtungen 3, 4 dichten die sich drehende Trommel 2 gegenüber dem stehenden Gehäuse 1 ab und stellen so sicher, dass die zirkulierende Luft 11 nicht entweicht. Ferner gleichen die Trommeldichtungen 3, 4 Toleranzen aus und kompensieren thermische Ausdehnungen von Trommel 2 und Gehäuse 1.

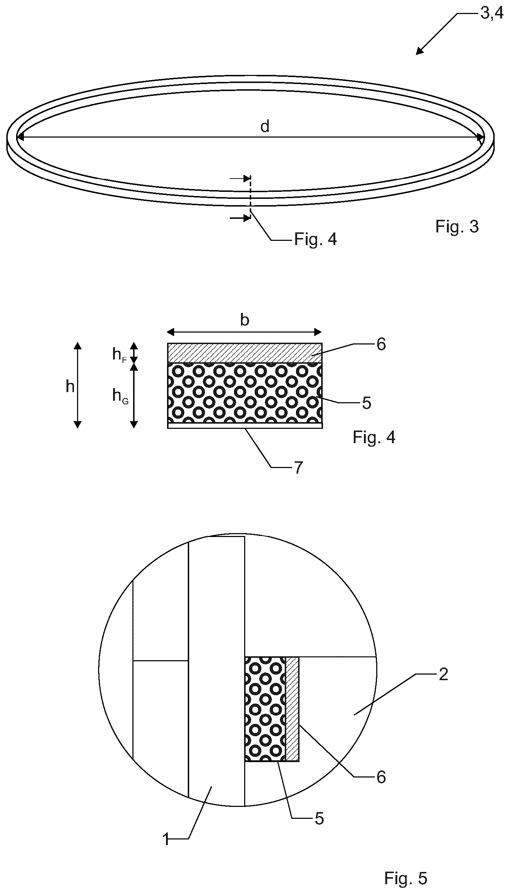

Fig. 3 und 4 zeigen die Trommeldichtung 3, 4 mit Grundkörper 5, Filz 6, Klebeschicht 7, wobei Innendurchmesser d, Breite b, Höhe h der Trommeldichtung angegeben sind, sowie die Höhe des Grundkörpers 5 h_{G} und des Filzes 6 h_{F}. Die Dicke der Klebschicht 7 ist vernachlässigbar, so dass h_{F} + h_{G} = h. Der Aussendurchmesser D ergibt sich somit aus D = d + b.
Fig. 5 zeigt die Montageposition des Trommeldichtung 3 relativ zur Trommel 2 und zum Gehäuse 1.

Herstellung einer Trommeldichtung:
Eine Nadelfilzmatte (enthaltend ein Fasergemisch aus Polyesterfasern, Polyacrylfasern und Polypropylenfasern, Dicke 2 mm) wird mit einer wässrigen PE-HMW Emulsion (Mittleres Molekulargewicht = 400'000 g/mol; Schmelzindex = 3.6g/10min gemäss ISO 1133) getränkt und anschliessend getrocknet. Man erhält so eine behandelte Nadelfilzmatte, deren Fasern mit PE-HMW beschichtet sind.

Mittels Flammkaschierung wird die behandelte Nadelfilzmatte auf eine Matte aus PU-Schaum (offenkettig, Dichte 45kg/m³, Dicke 13 mm) aufkaschiert. Man erhält so eine zweilagige Matte mit einer Lage aus behandeltem Nadelfilz in direktem Kontakt mit einer Lage aus PU-Schaum.

Auf der Rückseite dieser zweilagigen Matte, also der der Filzlage gegenüberliegenden Seite, wird eine Klebstoffschicht (Acrylsaureester-Copolymerisat) mit 100g/m² aufgetragen und dann mit eine PE-LD Schutzfolie versehen. Man erhält so ein Verbundmaterial aus behandeltem Nadelfilz, offenkettigem PU-Schaum, Klebstoffbeschichtung und Schutzfolie (die Gesamtdicke des Verbundmaterials ist ca. 15 mm).

Das erhaltene Verbundmaterial wird in Streifen geschnitten (Breite b=11 mm und Länge 1563 mm) und zu einem Ring geformt (rechteckiger Querschnitt, Innendurchmesser 486 mm), so dass die Schutzfolie die eine Stirnfläche ("unten") und der behandelte Nadelfilz die andere Stirnfläche ("oben") bildet, und an der Stossfläche vernäht wodurch die erfindungsgemässe Trommeldichtung 3, 4 erhalten wird (Fig. 3).

Diese wird nun in das Gehäuse des Trockners, bevorzugt in den im Gehäuse des Trockners vorgesehenen Dichtungsring, so eingeklebt, dass er die Trommel 2 gegen das Gehäuse 1 abdichtet (Fig. 5, 2).

## Patentansprüche

1. Trockner (10), insbesondere ein Haushaltswäschetrockner, umfassend
- ein Gehäuse (1),
- eine Trommel (2),
- eine vordere Trommeldichtung (3) und eine hintere Trommeldichtung (4),
wobei die Trommel (2)
- drehbar im Gehäuse (1) gelagert ist,
- zur Aufnahme von Textilien geeignet ist,
- das Durchströmen mit Luft (11) zur Trocknung der Textilien erlaubt; und
wobei die vordere und hintere Trommeldichtung (3,4)
- das Abdichten der die Trommel (2) durchströmenden Luft (11) gegenüber dem Gehäuse (1) bewirkt,
- jeweils einen elastischen Grundkörper (5) und einen darauf befestigten Filz (6) enthalten,
- der Grundkörper (5) in Richtung des Gehäuses (1) ausgerichtet ist, und
- der Filz (6) in Richtung Trommel (2) ausgerichtet ist,
**dadurch gekennzeichnet, dass** der Filz (6) aus Polyethylen hoher Dichte (PE-HD), hochmolekularem Polyethylen (PE-HMW) oder ultrahochmolekularem Polyethylen (PE-UHMW) besteht oder dieses enthält.

2. Trockner nach Anspruch 1, wobei die Fasern des Filzes (6) zu mehr als 50 wt%, bevorzugt mehr als 90 wt%, besonders bevorzugt zu 100 wt%, aus PE-HD, PE-HMW, oder PE-UHMW bestehen.

3. Trockner nach einem der vorangehenden Ansprüche, wobei die Fasern des Filzes (6) aus einem Polymer oder Polymergemisch bestehen, welches ausgewählt ist aus der Gruppe umfassend Polypropylen, Polyester, Polyamide, Polyurethane, Polyacrylate und Polyacrlylnitrile,
und wobei die Fasern des Filzes (6) mit mindesten 1 wt% PE-HD, PE-HMW, oder PE-UHMW beschichtet sind.

4. Trockner nach einem der vorangehenden Ansprüche, wobei der Grundkörper (5) aus einem offenzelligen Polymerschaum, bevorzugt einem offenzelligen Polyurethan, besteht.

5. Trockner nach einem der vorangehenden Ansprüche, wobei der Grundkörper (5) entlang des Umfangs ein Hohlprofil aufweist, bevorzugt ein O-Ring (5').

6. Trockner nach einem der vorangehenden Ansprüche, wobei der Filz (6) mit dem Grundkörper (5) entweder
- durch Verkleben, insbesondere mittels Übertragungskleber, oder
- durch Aufkaschieren, insbesondere Flammkaschieren, verbunden wird.

7. Trockner nach einem der vorangehenden Ansprüche, wobei der Grundkörper (5) auf der dem Filz (6) gegenüberliegenden Seite ein Klebschicht (7) aufweist.

8. Trockner nach einem der vorangehenden Ansprüche, wobei im Gehäuse (1) ein vorderer und hinterer Dichtungsring zur Befestigung der vorderen und hinteren Trommeldichtung (3, 4,) vorgesehen ist.

9. Trommeldichtung umfassend
- einen elastischen, ringförmigen Grundkörper (5)
- einen auf dessen einer Stirnseite befestigten Filz (6)
- eine auf dessen anderer Stirnseite angebrachte Klebschicht (7),
**dadurch gekennzeichnet, dass**
- die Fasern des Filzes (6) zu mindestens 50 wt% aus Polyethylen bestehen oder mit mindesten 1 wt% Polyethylen beschichtet sind, wobei das Polyethylen ausgewählt ist aus der Gruppe umfassend PE-HD, PE-HMW und PE-UHMW und
- der Filz (6) auf den Grundkörper (5) aufkaschiert oder mit diesem verklebt ist.

10. Trommeldichtung gemäss Anspruch 9, welcher
- einen Innendurchmesser d von 400-600 mm, bevorzugt 450-500 mm,
- eine Breite b von 5-20 mm, bevorzugt 8-15 mm, und / oder
- eine Höhe h von 5-25 mm, bevorzugt 10-20 mm aufweist.

11. Trommeldichtung gemäss Anspruch 9 oder 10, in welcher
- das Verhältnis Höhe Filz *h_{F}* : Höhe Grundkörper h_{G}: im Bereich von 0.1:1 bis 0.5:1, und / oder
- das Verhältnis Höhe h zu Breite b im Verhältnis 0.5:1 bis 2:1
liegt.
